Europäisches Patentamt

(19) European Patent Office (11) Publication number: **0 118 161**
Office européen des brevets **B1**

(12) **EUROPEAN PATENT SPECIFICATION**

(45) Date of publication of the patent specification: (51) Int. Cl.⁴: **H 04 N 7/16**
   **11.03.87**

(21) Application number: **84200324.6**

(22) Date of filing: **07.03.84**

(54) Switching system.

(30) Priority: **07.03.83 NL 8300827** (73) Proprietor: **ITT Nederland RSCE B.V., Platinaweg 10, NL-2544 EZ 's-Gravenhage (NL)**

(43) Date of publication of application:
   **12.09.84 Bulletin 84/37** (72) Inventor: **Ligtenberg, Bernard Christiaan, Goudensteinstraat 25, NL-4175 CE Haaften (NL)**

(45) Publication of the grant of the patent:
   **11.03.87 Bulletin 87/11** (74) Representative: **Plaisier, Aart et al, Nederlandsch Octrooibureau Johan de Wittlaan 15 P.O. Box 29720, NL-2502 LS 's-Gravenhage (NL)**

(84) Designated Contracting States:
   **AT BE CH DE FR GB IT LI LU NL SE**

(56) References cited:
   **EP - A - 0 031 457**

   **INTERNATIONAL COMMUNICATIONS CONFERENCE '79, Conference Record, 10th-14th June 1979, Boston, MA., vol. 3 of 4, pages 39.6.1-39.6.5, IEEE, New York, US, J. MENDRIK: "Configuration of the local telecommunications network in the Netherlands, in particular the network for transmission of radio and television signals"**

ACTORUM AG

## Description

The invention relates to a switching system comprising a selecting station and subscriber stations connected through a cable network to the selecting station, each subscriber station including selecting means for generating selecting signals for selecting one from a number of signals available in the selecting station, and the selecting station including control means responsive to the selecting signals for connecting the selected signal with the cable network to the respective subscriber station.

Such switching systems are known in the art and are used for the transmission of, in particular, television signals from the selecting station to a subscriber station. Besides television signals, also data signals, radio signals and the like can be transmitted via the cable network. The invention will be described herinafter in terms of its use with television signals, although the invention can be used equally well with other kinds of signals.

It is known (International Communications Conference 79, Conference Record, 10th–14th June 1979, Boston, MA, vol. 3 of 4, pages 39.6.1–39.6.5, IEEE, New York, US) to employ a so-called frequency selector in the selecting station. Such a frequency selector has an input and an output, a packet of signals of television programs stacked in frequency division multiplex (FDM) being presented at the input and one of these signals being present at the output in a channel having a fixed frequency. A selecting signal generated by the subscriber by means of a keyboard and applied to a control input of the frequency selector determines which one of the signals of the packet presented at the input of the frequency selector will be available at the output. This signal is applied through the cable network to the subscriber station.

It is further known to employ a so-called packet selector in a selecting station, such a packet selector being described in Dutch patent application 7 408 112. A packet selector has $n$ inputs and one output. Packets of signals of television programs stacked in FDM are presented at each of the inputs, while one of these signal packets, still stacked in FDM, is present at the output. If desired, a number of inputs can be concurrently connected with the output, provided it is seen to that no input signals having the same frequency position can appear at the output simultaneously. By means of a control signal applied to the control input of the packet selector, it is determined in the selecting station which one or ones of the packets of input signals is (are) available at the output and applied via the cable network to the subscriber. By means of the tuning device of his television set, the subscriber can then select a program from the packet of signals presented at the subscriber's cable network connector socket.

The use of frequency selectors entails the drawback that, when there are several television sets and/or video recorder(s) at the subscriber, each one of these devices receives the same program selected by means of the keyboard, which renders it impossible to concurrently watch different programs on different television sets or to watch one program and record another. To eliminate this drawback, a separate keyboard for each television set or video recorder would have to be provided at the subscriber and a separate frequency selector for each of these keyboards would have to be installed in the selecting station. As frequency selectors are complicated and hence expensive devices, from an economical point of view such a solution is not attractive. An advantage of the use of a frequency selector is that the subscriber is given a choice from a very large number, for example 30, of programs.

The use of a packet selector entails the drawback that, both when there is a single set and when there are several sets and/or video recorder(s) at the subscriber, each one of these devices receives the same limited signal packet of, for example, eight programs as the number of inputs of a packet selector is limited and it is difficult to extend this number. Should a subscriber desire a greater choice, either a multiple cable between the subscriber and the selecting station or additional facilities in the selecting station and/or at the subscriber would be required to provide such greater choice. It will be clear that, again, such a solution is not attractive from an economical point of view. The advantage of a packet selector is its relatively simple structure and hence its low costprice.

It is an object of the invention to provide a switching system which is relatively cheap and which permits a subscriber to choose, by means of a keyboard, from a very large number of programs and to receive, in addition to the program selected by means of the keyboard, other programs at other television sets and/or video recorder(s).

To achieve this object, the invention provides a swithcing system of the above type in which the selecting station includes an electronic packet selector having $n$ input terminals and an output terminal, at least one predetermined packet of signals from at least one of the $n$ input terminals being present at the output terminal, and the selecting station includes a frequency selector having an input terminal and an output terminal, a packet of signals being coupled with the input terminal and a signal selected from the packet of signals being present at the output terminal at a fixed frequency, which output signal of the frequency selector can be determined by the selecting signal from the selecting means, and means are provided for combining the signal at the output terminal of the packet selector and the signal at the output terminal of the frequency selector and applying the resultant combination to the cable network.

As in accordance with the invention the selecting station employs one frequency selector and one packet selector for each subscriber, an economically attractive solution to the above problem is achieved as it remains possible for the subscriber to choose, by means of his keyboard, from the complete range of programs offered, while additionally a fixed packet of programs is transmitted to the subscriber, from among which a choice can be made by means of the tuning devices of the other television sets and/or video recorder(s) present at the subscriber. The fixed packet of programs can comprise, for example, the eight national and international programs most in demand.

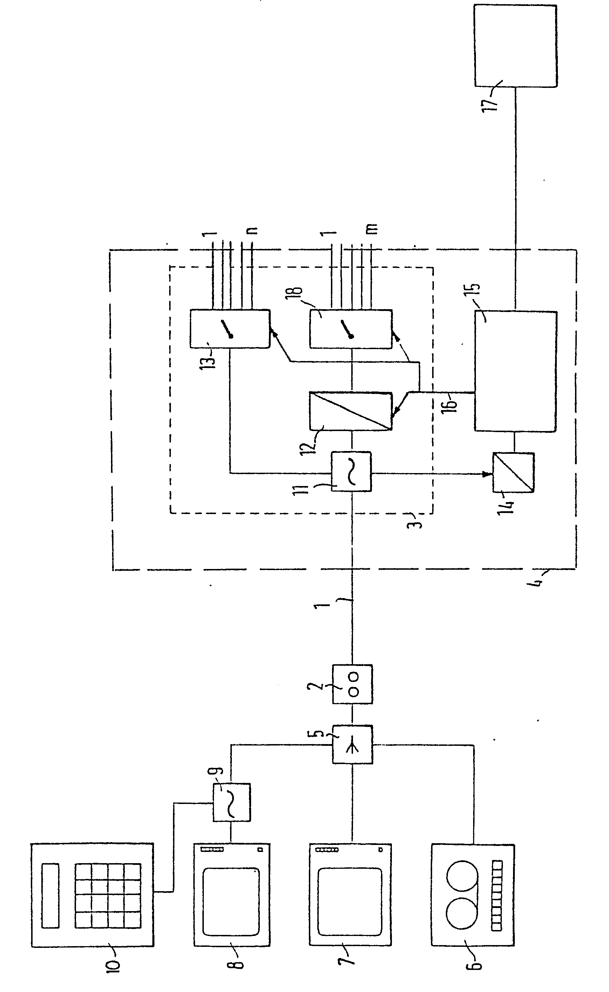

An embodiment of the invention will be described in detail hereinafter with reference to the accompanying drawing schematically showing the structure of a switching system according to the invention.

The drawing shows a cable 1 connecting a connector socket 2 at a subscriber with a group of switching means 3 located in a selecting station 4 and assigned to this subscriber. The selecting station 4 comprises a group of switching means 3 for each subscriber connected thereto.

In the embodiment described, the subscriber has a video recorder 6, a first television set 7 and a second television set 8 connected through suitable cables and via a distributor 5 to the connector socket 2. The connection between the second television set 8 and the distributor 5 includes a connecting filter 9 connected with the second television set as well as with a keyboard 10. The connecting filter 9 is operative to separate signals destined for the television set 8 from selecting signals originating from the keyboard and signals originating from the selecting station 4 and destined for the reading means on the keyboard.

The group of switching means 3 in the selecting station includes a frequency change filter 11 connected to a frequency selector 12, a packet selector 13 and a modulator/demodulator (modem) 14. The modem 14 receives, via the filter 11, the selecting signals generated by the subscriber by means of the keyboard 10. The filter 11 is further operative to combine the output signal of the packet selector 13 and the output signal of the frequency selector 12.

The frequency selector 12 and the packet selector 13 are connected through a line 16 to a microprocessor 15 so as to each be controlled thereby, which microprocessor is controlled from a control unit 17 located in a main selecting station.

The packet selector 13 has $n$ inputs, at one of which there is present the predetermined standard packet to be normally transmitted to the subscriber together with, if desired, a signal produced by the frequency selector 12. The other inputs of the packet selector 13 may be used for, for example, signals with announcements from the company running the cable system or, for example in the event of calamities, other signals to be transmitted to the subscriber in response to the control signal produced by the microprocessor 15. For example, in default of payment the control unit 17 in the main selecting station may transmit such a signal to the microprocessor 15 that the frequency selector assigned to the non-paying subscriber is fully inhibited and the packet selector only issues an announcement from the company running the system, which announcement gives the reason for the disconnection. Furthermore, in the event that the disconnected subscriber operates the keyboard, the microprocessor 15 can produce an announcement to be displayed on the display panel of the keyboard.

Under the control of the control unit 17, the microprocessor 15 further determines whether, and if so, which signals are to be supplied by the frequency selector to the subscriber, while this microprocessor (15) is further operative to keep a record of the selected programs and/or the period of time during which a given program is transmitted via frequency selector 12. The subscriber can thus be charged afterwards for the use of the frequency selector on the basis of this record. Self-evidently, it is possible that the subscriber wants to receive only the standard packet of programs provided by the packet selector 13 and is not interested in the range of choice provided by the frequency selector. In that case, the microprocessor 15 inhibits the frequency selector 12.

In accordance with a preferred embodiment of the switching system according to the invention, the input of the frequency selector 12 is connected to the output of a second packet selector 18 having $m$ inputs at which a number of packets of signal stacked in FDM is present. The capacity of the frequency selector can thus be multiplied in a simple manner. For example, if the frequency selector 12 has a capacity of 30 channels and the packet selector 18 has two inputs, the capacity of frequency selector 12 is doubled to 60 channels. The provision of the packet selector 18 has the advantage that often the use of a frequency selector of limited capacity in combination with a packet selector having a sufficient number of inputs will suffice. A frequency selector of limited capacity is relatively cheap and so is a packet selector. In this manner, a simple, lowprice selector of sufficient capacity is obtained. The microprocessor 15 controls also the packet selector 18 via the line 16.

It is observed that the keyboard 10 with the filter 9 can also be included in the line to television set 7 or video recorder 6, in which case the frequency selector is adjusted for television set 7 and video recorder 6, respectively. In addition to the standard packet, also the output signal of the frequency selector 12 will be available at the other terminals without, however, the possibility to choose.

It will be clear that the switching system according to the invention allows a subscriber to freely select programs at one terminal by means of the keyboard and the frequency selector located in the selecting station, while in addition to this selected signal a standard packet of signals remains available at all other terminals.

Furthermore, the switching system according to the invention is of simple structure and is considerably cheaper than a switching system requiring a separate keyboard at the subscriber and a separate frequency selector in the selecting station for each appliance used by the subscriber.

### Claims

1. A switching system comprising a selecting station (4) and subscriber stations connected through a cable network to the selecting station, each subscriber station including selecting means (9, 10) for generating selecting signals for selecting one from a number of signals available in the selecting station, and the selecting station including control means (17) responsive to the selecting signals for connecting the selected signal with the cable network to the respective subscriber station, characterized in that the selecting station (4) includes an electronic packet selector (13) having $n$ input terminals and an output terminal, at least one predetermined packet of signals from at least one of the $n$ input terminals being present at the output terminal, and the selecting station (4) includes a frequency selector (12) having an input terminal and an output terminal, a packet of signals being coupled with said input terminal and a signal selected from the packet of signals being present at said output terminal at a fixed frequency, which output signal of the frequency selector (12) can be determined by the selecting signal from the selecting means (9, 10), and means (11) are provided for combining the signal at the output terminal of the packet selector (13) and the signal at the output terminal of the frequency selector (12) and applying the resultant combination to the cable network.

2. A switching system according to claim 1, characterized in that the input terminal of the frequency selector (12) is coupled with the output terminal of a second packet selector (18) having $m$ input terminals, packets of signals being present at at least two of the $m$ input terminals.

3. A switching system according to claim 1 or 2, characterized in that the control means (17) determine which ones of the input signals are present at the output of the first packet selector (13).

4. A switching system according to any one of claims 1–3, characterized in that the means for combining the output signals of the frequency selector (12) and the packet selector (13) further include means for applying to the control means selecting signals supplied from the subscriber station via the cable network, and means for applying signals from the control means (17) to the cable network to the subscriber station.

### Patentansprüche

1. Schaltanlage mit einer Wahlstelle (4) und mit über ein Kabelnetz mit der Wahlstelle verbundene Teilnehmerstellen, wobei jede Teilnehmerstelle Wählmittel (9, 10) zur Erzeugung von Wahlsignalen aufweist, um eines aus einer Anzahl von in der Wahlstelle zur Verfügung stehenden Signalen auszuwählen, und wobei die Wahlstelle auf die Wahlsignale ansprechende Steuermittel (17) aufweist, um das ausgewählte Signal an das Kabelnetz zur entsprechenden Teilnehmerstelle anzulegen, dadurch gekennzeichnet, dass die Wahlstelle (4) einen elektronischen Paketwähler (13) mit $n$ Eingangsklemmen und einer Ausgangsklemme aufweist, wobei mindestens ein vorbestimmtes Paket von Signalen von wenigstens einer der $n$ Eingangsklemmen an der Ausgangsklemme auftritt, und dass die Wahlstelle (4) einen Frequenzwähler (12) mit einer Eingangsklemme und einer Ausgangsklemme aufweist, wobei ein Paket von Signalen an der genannten Eingangsklemme anliegt und ein aus dem Paket von Signalen ausgewähltes Signal an der genannten Ausgangsklemme mit einer festen Frequenz vorhanden ist, welches Ausgangssignal des Frequenzwählers (12) durch die Wahlsignale der Wahlmittel (9, 10) bestimmt werden kann, und dass Mittel (11) vorhanden sind, um das Signal an der Ausgangsklemme des Paketwählers (13) und das Signal an der Ausgangsklemme des Frequenzwählers (12) zu kombinieren und um das resultierende Signal an das Kabelnetz anzulegen.

2. Schaltanlage nach Anspruch 1, dadurch gekennzeichnet, dass die Eingangsklemme des Frequenzwählers (12) mit der Ausgangsklemme eines zweiten Paketwählers (18) mit $m$ Eingangsklemmen gekoppelt ist, wobei Signalpakete an mindestens zweien der $m$ Eingangsklemmen vorhanden sind.

3. Schaltanlage nach Anspruch 1 oder 2, dadurch gekennzeichnet, dass die Steuermittel (17) bestimmen, welche der Eingangssignale am Ausgang des ersten Paketwählers (13) vorhanden sind.

4. Schaltanlage nach einem der Ansprüche 1–3, dadurch gekennzeichnet, dass die Mittel zur Kombination der Ausgangssignale des Frequenzwählers (12) und des Paketwählers (13) weiter Mittel aufweisen, um von der Teilnehmerstelle über das Kabelnetz gelieferte Wahlsignale an die Steuermittel anzulegen, und Mittel zum Anlegen von Signalen von den Steuermitteln (17) an das Kabelnetz zur Teilnehmerstelle.

### Revendications

1. Système commutation comprenant une station de sélection (4) et des installations d'abonnés connectées par un réseau de câbles à la station de sélection, chaque installation d'abonné comprenant des moyens de sélection (9, 10) pour engendrer des signaux de sélection, afin de sélectionner l'un parmi plusieurs des signaux disponibles dans la station de sélection, et la station de sélection comprenant des moyens de commande (17) répondant aux signaux de sélection en connectant le signal sélectionné au réseau de câbles, vers l'installation d'abonné appropriée, caractérisé en ce que la station de sélection (4) comporte un sélecteur électronique de paquets (13) ayant $n$ accès d'entrée et un accès de sortie, un paquet prédéterminé au moins de signaux provenant de l'un au moins des $n$ accès d'entrée étant présent sur l'accès de sortie et en ce que la station de sélection (4) comprend un sélecteur de fréquence (12) ayant un accès d'entrée et un accès de sortie, un paquet de signaux étant couplé audit accès d'entrée et un signal sélectionné parmi les signaux du paquet étant présent sur ledit accès de sortie à une fréquence fixe, ce signal de sortie du sélecteur de fréquence (12) pouvant être déterminé par le signal de sélection des moyens de sélection (9, 10), tandis que des moyens (11) sont prévus pour combiner le signal sur l'accès de sortie du sélecteur de paquets (13) et le signal sur l'accès de sortie du sélecteur de fréquence (12), afin d'appliquer la combinaison résultante sur le réseau de câbles.

2. Système de commutation selon la revendication 1, caractérisé en ce que l'accès d'entrée du sélecteur de fréquence (12) est couplé à l'accès de sortie d'un second sélecteur de paquets (18) ayant $m$ accès d'entrée, des paquets de signaux étant présents sur au moins deux des $m$ accès d'entrée.

3. Système de commutation selon la revendication 1 ou 2, caractérisé en ce que lesdits moyens de commande (17) déterminent lesquels des signaux d'entrée sont présents sur la sortie du premier sélecteur de paquets (13).

4. Système de commutation selon l'une quelconque des revendications 1 à 3, caractérisé en ce que les moyens pour combiner les signaux de sortie du sélecteur de fréquence (12) et su sélecteur de paquets (13) comportent de plus des moyens pour appliquer aux moyens de commande des signaux de sélection fournis par l'installation d'abonné au travers du réseau de câbles et des moyens pour appliquer des signaux provenant des moyens de commande (17) au réseau de câbles, vers l'installation d'abonné.